# EUROPEAN PATENT SPECIFICATION

(11) **EP 2 848 399 B1**
(45) Date of publication and mention of the grant of the patent: **13.09.2017**
(21) Application number: 13184222.1
(22) Date of filing: 13.09.2013
(51) Int. Cl.: B31B 50/10, B31B 50/84, B65H 23/04, B65H 23/188, B29C 45/14, B29C 45/17, B65H 20/02, B65H 20/24

(54) **A UNIT AND A METHOD FOR CARRYING OUT A FIRST OPERATION AND A SECOND OPERATION ON A WEB**
EINHEIT UND VERFAHREN ZUR DURCHFÜHRUNG EINER ERSTEN UND EINER ZWEITEN OPERATION AUF EINER BAHN
UNITÉ ET PROCÉDÉ PERMETTANT DE METTRE EN OEUVRE UNE PREMIÈRE PUIS UNE DEUXIÈME OPÉRATION SUR UNE BANDE

(43) Date of publication of application: 18.03.2015
(73) Proprietor: Tetra Laval Holdings & Finance SA, 1009 Pully (CH)
(72) Inventor: Ricco', Marco, 41057 IT - Spilamberto (IT)
(74) Representative: Tetra Pak - Patent Attorneys SE

(56) References cited:
- JP-A- 2004 106 431
- US-A1- 2002 088 202
- US-B1- 6 386 851

## Description

The present invention relates to a unit for carrying out a first operation and a second operation respectively onto a first area and a second area of a packaging material.

The present invention also relates to a method for carrying out a first operation and a second operation respectively onto a first area and a second area of a packaging material.

As is known, many pourable food products, such as fruit juice, UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may comprise a layer of fibrous material, e.g. paper, or mineral-filled polypropylene material, and a number of lamination layers of heat-seal plastic material, e.g. polyethylene films, covering both sides of the base layer.

In the case of aseptic packages for long-storage products, such as UHT milk, the packaging material also comprises a layer of gas-barrier material, e.g. aluminium foil or ethyl vinyl alcohol (EVOH) film, which is superimposed on a layer of heat-seal plastic material, and is in turn covered with another layer of heat-seal plastic material forming the inner face of the package eventually contacting the food product.

Packages of this sort are normally produced on fully automatic packaging machines, on which a continuous tube is formed from the web-fed packaging material; the web of packaging material is sterilized on the packaging machine, e.g. by applying a chemical sterilizing agent, such as a hydrogen peroxide solution, which, once sterilization is completed, is removed from the surfaces of the packaging material, e.g. evaporated by heating; and the web of packaging material so sterilized is maintained in a closed, sterile environment, and is folded and sealed longitudinally to form a vertical tube.

The tube is filled with the sterilized or sterile-processed food product, and is sealed and subsequently cut along equally spaced cross sections to form pillow packs, which are then folded mechanically to form respective finished, e.g. substantially parallelepiped-shaped, packages.

Alternatively, the packaging material may be cut into blanks, which are formed into packages on forming spindles, and the packages are filled with the food product and sealed. One example of this type of package is the so-called "gable-top" package known by the trade name Tetra Rex (registered trademark).

To open the packages described above, various solutions of opening devices have been proposed.

A first solution of opening device comprises a patch defined by a small sheet of a heat-seal plastic material, and which is heat sealed over a respective hole on the side of the web eventually forming the inside of the package; and a pull-off tab applied to the opposite side of the packaging material and heat sealed to the patch. The tab and patch adhere to each other, so that, when the tab is pulled off, the portion of the patch heat sealed to it is also removed to uncover the hole.

Alternatively, a second solution of the opening devices comprises closable opening devices which are applied by injecting plastic material directly onto the holes of the web. In this case, the application station is a molding station.

Finally, a third solution of opening device comprises a frame defining an opening and fitted about a pierceable or removable portion of the packaging material.

The pierceable portion of the package may be defined by a so-called "prelaminated" hole, i.e. a hole formed in the base layer only and covered by the other lamination layers, including the layer of gas-barrier material. Also in this case, the application station is a molding station.

More precisely, the web is provided with a plurality of prelaminated holes in a packaging material factory and then fed to the packaging machine.

The web is then wound off from a reel within the packaging machine. Subsequently, the web is stepwise fed to the application station before the packaging material is folded to form a tube. In particular, the web is fed towards the molding station along an advancing direction.

The molding of opening devices at the molding station requires that pre-laminated holes are arrested in respective desired positions relative to the molding station.

In particular, the desired position is required for a correct molding of the opening device at the molding station.

US6386851 discloses a multi-stage unit for processing a web packaging material in a machine for packaging food products, including a first processing station, a second processing station and a system for indexing the web packaging material comprising a first feeding device for step-feeding the web packaging material through the first processing station, a second feeding device for step-feeding the web packaging material through the second processing station, and a control unit controlling the first feeding device in response to a sensor detecting a first index code preprinted on the web packaging material, and the second feeding device in response to a second sensor detecting a second index code made on the web packaging material at said first processing station.

US2002/088202 discloses a form-fill-seal machine comprising means for moving a web of packaging material through the machine according to a process path and means for transforming the web into filled bags, furthermore comprising a zipper strip applicator device having means for supplying a zipper strip for each bag transverse to the process path, which supply means comprise a first and a second conveyor, which in the supply direction of the zipper strip are placed one behind the other and are both provided with means for retaining the zipper strip during supply, a blade being placed between the first and the second conveyor for cutting the zipper strip and the first and the second conveyor being provided with their own first and second drive means.

EP-A-2357138, in the name of the same Applicant, discloses a unit for applying opening devices onto respective pre-laminated holes, substantially comprising:
- a tensioning device for establishing a correct level of tension in the web of packaging material with the pre-laminated holes, which advances along an advancing direction;
- the molding station, which is stepwise fed with the web by the feeding device and is adapted to injection mould a plurality of opening devices onto the web and in correspondence of respective pre-laminated holes of the web; and
- an advancing device, which is arranged downstream of the molding station according to the advancing sense of the web along the advancing direction and adapted to advance the web along the advancing direction.

In particular, the advancing device stepwise feeds one after the other and along the advancing direction a plurality of portions of the web each comprising three pre-laminated holes towards the molding station.

The molding station comprises a plurality, three in the known solution, of moulds, which inject the plastic material forming the opening devices onto the web and in correspondence of respective pre-laminated holes.

Furthermore, the pre-laminated holes are associated to respective magnetic markers.

In order to adjust the position of the pre-laminated holes with respect to relative moulds, the unit comprises a magnetic sensor for detecting the presence of markers while the web is advancing and generating respective measure signals associated to the real positions of the pre-laminated holes.

Still more precisely, the additional displacement along the advancing direction is associated to the difference between the detected position and the desired position of only one, namely the intermediate one, pre-laminated hole.

Even if the previously described known solution efficiently adjusts the position of the pre-laminated holes relative to the moulds, an increase in the number of the moulds remains highly desirable, in order to correspondingly increase the rate of application of the opening devices.

However, the known solution allows to correctly positioning in the desired position along the advancing direction only one reference pre-laminated hole with respect to relative mould, in particular the intermediate pre-laminated hole.

The remaining pre-laminated holes will not be arranged in the respective desired positions with respect to relative moulds. This is because, there are inevitable tolerance errors in the distance between homologous points, e.g. the axes, of the remaining pre-laminated holes and of the reference pre-laminated hole.

Unfortunately, the higher is the number of the moulds, the longer is the tolerance chain formed by the inevitable errors in the distances between homologous points, e.g. between the axes, of the reference pre-laminated hole and the remaining pre-laminated holes.

Accordingly, in the known solution, an increase in the number of moulds inevitably affects the precision in the positioning of the remaining pre-laminated holes with respect to the corresponding desired position and therefore to the respective moulds.

A need is therefore felt within the industry to increase the number of moulds without lengthen the tolerance chain formed by the inevitable errors in the distances between homologous points of the pre-laminated holes and, therefore, without affecting the precision in the final positioning of the pre-laminated holes with respect to the corresponding desired positions, and therefore, to the respective moulds.

It is an object of the present invention to provide a unit for carrying out a first operation and a second operation respectively onto a first area and a second area of a packaging material, designed to meet at least one of the above-identified requirement, the first operation comprising the step of applying a first opening device on the first area and the second operation comprising the step of applying a second opening device on the second area.

According to the present invention, there is provided a unit for carrying out a first operation and a second operation respectively onto a first area and a second area of a packaging material, as claimed in Claim 1.

The present invention also relates to a method for carrying out a first operation and a second operation respectively onto a first area and a second area of a packaging material, as claimed in claim 9.

A preferred, non-limiting embodiment of the present invention will be described by way of example with reference to the accompanying drawings, in which:
Figure 1 shows a perspective view of a unit for molding a plurality of opening devices onto respective pre-laminated holes of a web of a packaging material, according to the present invention;
Figure 2 shows a frontal view of the unit of Figure 1, with a feeding group in a first position;
Figure 3 shows a frontal view of the unit of Figure 1, with the feeding group in a second position;
Figure 4 is a perspective enlarged view of some components of the feeding group of Figures 1 to 3;
Figure 5 is a frontal view of the feeding group of Figures 1 to 4 in the first position;
Figure 6 is a frontal view of the feeding group of Figures 1 to 5 in the second position; and
Figure 7 schematically shows further components of the feeding group of Figures 1 to 6.

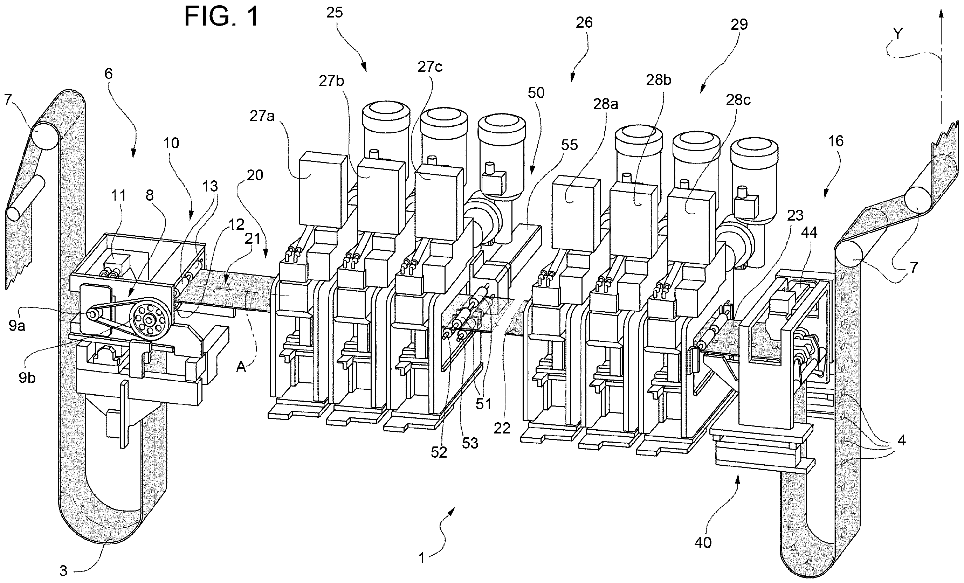

Number 1 in Figure 1 indicates as a whole a unit for molding a plurality of opening devices 4 onto respective pre-laminated holes of a web 3 of a packaging material.

Packaging material is intended to form a plurality of packages, which preferably contain a pourable food product, such as pasteurized or UHT milk, fruit juice, wine, etc.

Packages may also contain a food product, which is pourable within a tube of packaging material when producing packages, and sets after packages are sealed. One example of such a food product is a portion of cheese, which is melted when producing packages and sets after packages are sealed.

The tube is formed in known manner downstream from unit 1 by longitudinally folding and sealing a known web 3 of heat-seal sheet material, which comprises a layer of paper material covered on both sides with layers of heat-seal plastic material, e.g. polyethylene. In the case of an aseptic package for long-storage products, such as UHT milk, the packaging material comprises a layer of oxygen-barrier material, e.g. aluminium foil, which is superimposed on one or more layers of heat-seal plastic material eventually forming the inner face of package contacting the food product.

The tube of packaging material is then filled with the food product for packaging, and is sealed and cut along equally spaced cross sections to form a number of pillow packs (not shown), which are then transferred to a folding unit where they are folded mechanically to form respective packages.

A first solution of opening device 4 comprises a patch defined by a small sheet of a heat-seal plastic material, and which is heat sealed over a respective hole on the side of the web eventually forming the inside of the package; and a pull-off tab applied to the opposite side of the packaging material and heat sealed to the patch. The tab and patch adhere to each other, so that, when the tab is pulled off, the portion of the patch heat sealed to it is also removed to uncover the hole.

Alternatively, a second solution comprises closable opening devices 4 which are applied by injecting plastic material directly onto the holes of the web 3.

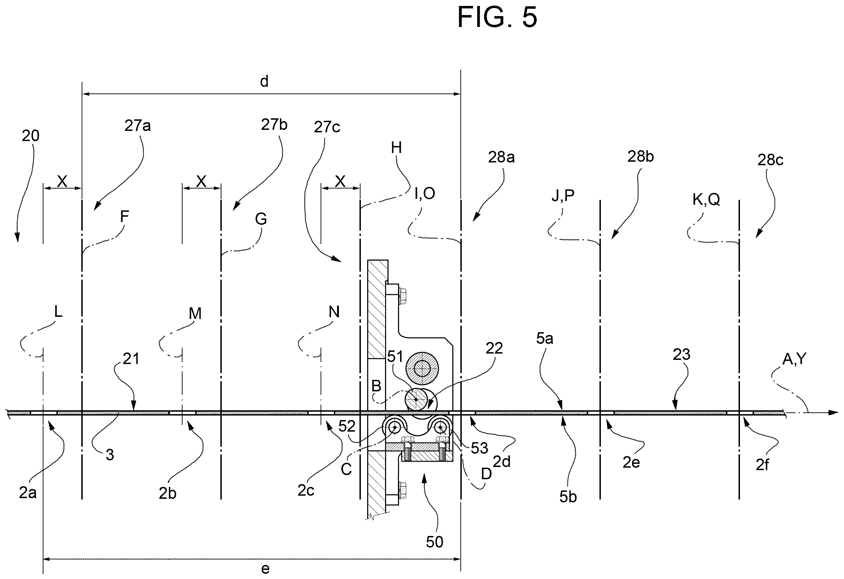

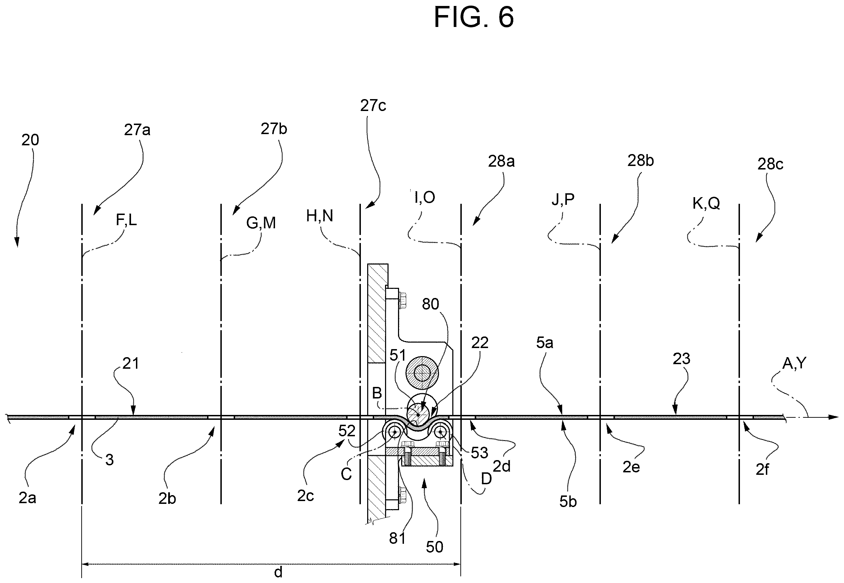

In a third solution, web 3 comprises a number of removable portions (only schematically shown in Figures 5 and 6) equally spaced, except for the inevitable tolerance errors, in a lengthwise direction A parallel to an advancing path Y of the packaging material, and to which opening devices 4 are injection molded.

In the embodiment shown, the removable portion is defined by a so-called pre-laminated hole 2a, 2b, 2c, 2d, 2e, 2f, i.e. a hole (or opening) formed through the base layer of packaging material and covered by the lamination layers so that the hole is sealed by a respective sheet cover portion.

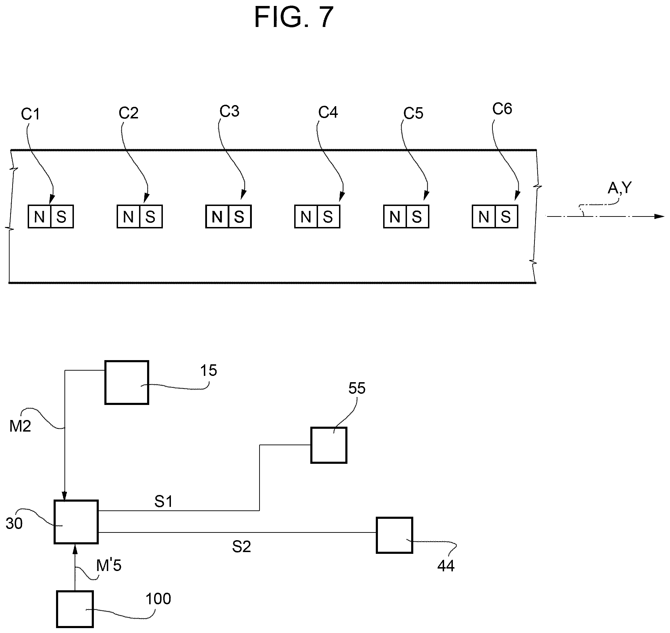

Web 3 finally comprises a plurality of magnetic markers C1, C2, C3, C4, C5, C6 (shown in Figure 7 for sake of clarity, but not visible in reality).

More precisely, the positions of pre-laminated holes 2a, 2b, 2c, 2d, 2e, 2f are associated respectively to the positions of magnetic markers C1, C2, C3, C4, C5, C6.

In the embodiment shown, magnetic markers C1, C2, C3, C4, C5, C6 are printed with a magnetizable ink which has been subsequently magnetized. More precisely, each magnetic marker C1, C2, C3, C4, C5, C6 has respective north and south poles aligned along path Y.

Magnetic markers C1, C2, C3, C4, C5, C6 are applied to web 3 in alignment with pre-laminated holes 2a, 2b, 2c, 2d, 2e, 2f.

Unit 1 substantially comprises (Figure 1):
- a feeding group 6 arranged downstream of the reel and adapted to stepwise feed web 3 along direction A; and
- a molding station 26 stepwise fed with web 3 by group 6 and adapted to injection mould opening devices 4 onto web 3 and at respective pre-laminated holes 2a, 2b, 2c, 2d, 2e, 2f of web 3.

More precisely, group 6 stepwise feeds one after the other a plurality of portions 20 of web 3 each comprising a certain number of pre-laminated holes 2a, 2b, 2c, 2d, 2e, 2f, six in the embodiment shown, towards molding station 26.

In particular, portion 20 extends along direction A, when it is arrested under molding station 26.

In detail, each portion 20 comprises, in turn, proceeding along direction A and according to advancing sense of web 3 indicated by the arrow in Figures 1 to 7:
- a stretch 21 comprising a first group, three in the embodiment shown, of pre-laminated holes 2a, 2b, 2c;
- a stretch 22; and
- a stretch 23 comprising a second group, three in the embodiment shown, of pre-laminated holes 2d, 2e, 2f.

Molding station 26 comprises, in turn, proceeding along direction A and according to advancing direction of web 3:
- a group 25 of moulds 27a, 27b, 27c, three in the embodiment shown, which inject the plastic material forming respective opening devices 4 onto web 3 and at respective pre-laminate holes 2a, 2b, 2c, once portion 20 has been arrested by feeding group 6; and
- a group 29 of moulds 28a, 28b, 28c, three in the embodiment shown, which inject the plastic material forming respective opening devices 4 onto web 3 and at respective pre-laminate holes 2d, 2e, 2f, once portion 20 has been arrested by feeding group 6.

Each mould 27a, 27b, 27c, 28a, 28b, 28c is adapted to inject a respective opening device 4 onto a respective pre-laminated hole 2a, 2b, 2c, 2d, 2e, 2f about a relative axis F, G, H, I, J, K, when portion 20 of web 3 is arrested (Figures 5 and 6).

In other words, each axis F, G, H, I, J, K is the reference axis of respective injected opening devices 4.

Axes F, G, H, I, J, K are orthogonal to direction A and web 3 and, in the embodiment shown, vertical.

In the embodiment shown, the distance between axes F, I; G, J; H, K measured parallel to direction A equals length d (Figure 5).

Furthermore, each pre-laminated hole 2a, 2b, 2c, 2d, 2e, 2f is associated to an axis L, M, N, O, P, Q (Figures 5 and 6) about which respective opening device 4 should be ideally injected.

For each pre-laminated holes 2a, 2b, 2c, 2d, 2e, 2f, it is therefore possible to identify a respective desired injection position at which respective axes L, M, N, O, P, Q coincide with corresponding axes F, G, H, I, J, K.

It is important to point out that due to the inevitable tolerance errors existing in the distance measured parallel to direction A between axes L, M, N, O, P, Q, it is not possible to simultaneously arrange all pre-laminated holes 2a, 2b, 2c, 2d, 2e, 2f in respective desired injection positions, as it will be apparent from the following of the present description.

In the embodiment shown, pre-laminated holes 2a, 2b, 2c, 2d, 2e, 2f are equi-spaced along direction A.

In other words, the distances between consecutive axes L, M; M, N; N, O; O, P; P, Q measured parallel to direction A are equal.

Feeding group 6 comprises, in turn, proceeding parallel to advancing sense of web 3 parallel to direction A (Figure 1):
- a device 10 arranged downstream from the reel and adapted to create a tension in web 3 along direction A; and
- a device 16 arranged downstream from the molding station 26 along path Y and adapted to advance web 3 along direction A in the sense indicate by the arrow in Figure 1.

Unit 1 also comprises a plurality of idler rollers 7 which are arranged upstream from device 10 and downstream from device 16 and are adapted to support web 3 while it advances along path Y.

In greater detail, device 10 comprises (Figure 1):
- a motor 11 for providing web 3 with the correct level of tension;
- a plurality of rollers 12 and counter-rollers (not shown) for guiding web 3 along direction A;
- a pair of rollers 13 for damping the oscillations of web 3 in a vertical plane.

Device 10 further comprises:
- a magnetic sensor 15 (schematically shown in Figure 7) arranged upstream of moulding station 26 with reference to the advancing sense of web 3, and adapted to detect the real positions of magnetic markers C1, C2, C3, C4, C5, C6 upstream of moulding station 26 and to generate respective measure signals M1, M2, M3, M4, M5, M6 associated to the real position of pre-laminated holes 2a, 2b, 2c, 2d, 2e, 2f detected, through the respective magnetic markers C1, C2, C3, C4, C5, C6, upstream of moulding station 26; and
- a magnetic sensor 100 (schematically shown in Figure 7) interposed between moulds 28a, 28b, and adapted to detect the positions of magnetic markers C1, C2, C3, C4, C5, C6 between moulds 28a, 28b and to generate respective measure signals M1', M2', M3', M4', M5', M6' associated to the real position of pre-laminated holes 2a, 2b, 2c, 2d, 2e, 2f detected, through the respective magnetic markers C1, C2, C3, C4, C5, C6, between moulds 28a, 28b.

Motor 11 exerts an action on web 3 opposite to the action exerted by device 16, so as to provide web 3 with the correct level of tension along direction A.

Roller 12 is driven in rotation by motor 11 through the interposition of a belt 8. More precisely, belt 8 is wound onto a pulley 9a driven in rotation by motor 11 and a pulley 9b which drives in rotation roller 12.

Roller 12 and corresponding counter-roller cooperate with opposite sides of web 3 which is being advanced towards molding station 26.

Sensor 15, in the embodiment shown, detects the transition between respective north and south pole of magnetic markers C1, C2, C3, C4, C5, C6, so detecting the positions of magnetic markers C1, C2, C3, C4, C5, C6 and, therefore, the positions of relative pre-laminated holes 2a, 2b, 2c, 2d, 2e, 2f along direction A.

Sensors 15, 100 generate measure signals M1, M2, M3, M4, M5, M6; M1', M2', M3', M4', M5', M6' which are associated to the real positions of pre-laminated holes 2a, 2b, 2c, 2d, 2e, 2f corresponding to the positions of respective magnetic markers C1, C2, C3, C4, C5, C6 along direction A and upstream of moulding station 26 and between moulds 28a, 28b respectively.

Device 16 comprises:
- a fixed frame 40; and
- a motor 44 (shown in Figure 1) fitted to frame 40 and adapted to step-wise advance web 3 along direction A and on the opposite side of molding station 26.

Advantageously, motor 44 of device 16 is controllable to arrest web 3 in a position, at which the distance between axes L, O; M, P; N, Q measured parallel to direction A equals length e (figure 5), and at which pre-laminated holes 2a, 2b, 2c are spaced for an intentional offset X (Figure 5) with respect to the respective desired injection positions; and group 6 further comprises an actuator 50 controllable for moving pre-laminated holes 2a, 2b, 2c towards the respective desired injection positions, so as to recover offset X; the absolute value of the difference between length e and length d is equal to offset X.

In other words, motor 44 is controllable to arrest portion 20 of web 3 in a position, at which the distance between axis F, G, H of pre-laminated holes 2a, 2b, 2c and respective axis L, M, N of corresponding moulds 27a, 27b, 27c equals intentional offset X measured parallel to direction A (Figure 5), except for the inevitable tolerance errors existing in the distances between axes L, M; M, N.

It is important to point out that the expression intentional offset is used to indicate a distance intentionally left by feeding group 6 between axis L, M, N and relative axis F, G, H.

In this respect, intentional offset X is different from the inevitable tolerance errors (not shown in Figures 5 and 6) existing in the distances between axis L, M; M, N; N, O.

In particular, the value of offset X is far greater than the inevitable tolerance errors existing in the distances between axis L, M; M, N; N, O of pre-laminated holes 2a, 2b, 2c.

Furthermore, length e is measured when portion 20 is flat and wholly lies on a plane parallel to direction A.

In the embodiment shown, length e is greater than length d.

In particular, length e is not an integer multiple of length d.

In the embodiment shown, length e is an integer multiple of the distance between axes L, M; M, N; N, O; O, P; P, Q of two consecutive pre-laminated holes 2a, 2b; 2b, 2c; 2c, 2d; 2d, 2e; 2e, 2f; whilst length d is not an integer multiple of the distance between axes L, M; M, N; N, O; O, P; P, Q of two consecutive pre-laminated holes 2a, 2b; 2b, 2c; 2c, 2d; 2d, 2e; 2e, 2f.

It is important to point out that lengths e, d are in the present description nominal length, which are measured without taking into account the inevitable tolerances.

Still more precisely, when portion 20 is arrested, pre-laminated holes 2a, 2b, 2c are arranged upstream of respective desired injection position, proceeding according to the advancing sense of web 3 along direction A.

In other words, when portion 20 is arrested, axes L, M, N of respective pre-laminated holes 2a, 2b, 2c are upstream of axes F, G, H of respective moulds 27a, 27b, 27c, proceeding according to the advancing sense of web 3 along direction A.

Furthermore, motor 44 is controllable to arrest web 3 with pre-laminated holes 2d, 2e, 2f substantially with no intentional offset with respect to the desired injection positions of application of respective opening devices 4.

Still more precisely, as it will be evident in the following of the present description, motor 44 is controllable to arrest portion 20 in such a position that axis J of pre-laminated holes 2e coincide with axis P of respective mould 28b and is, therefore, in the desired injection position.

Accordingly, the positions of axes O, Q of pre-laminated holes 2d, 2f with respect to relative axes I, K of respective moulds 28a, 28c are determined by the positioning of pre-laminated hole 2e in the desired injection position.

In light of the above, pre-laminated holes 2d, 2f may be slightly spaced along direction A from respective desired injection positions, as a consequence of the inevitable tolerance errors existing in the distance between axes O, P and P, Q.

In particular, once portion 20 has been arrested, the distance between axis O of pre-laminated hole 2d and axis I of mould 28a equals the inevitable tolerance error existing in the distance between axes O, P.

In the very same way, once portion 20 has been arrested, the distance between axis Q of pre-laminated hole 2f and axis K of mould 28c equals the inevitable tolerance error existing in the distance between axes Q, P.

Due to the fact that these inevitable tolerance errors can be neglected, they are not visible in Figures 5 and 6.

With reference to Figure 6, actuator 50 is controllable to move pre-laminated hole 2b exactly in the respective desired injection position along direction A and in the same sense of the advancing sense of web 3, before the injection of respective opening devices 4.

In other words, actuator 50 is controllable to move web 3 so as to render axis M of pre-laminated hole 2b and axis G of mould 27b coincident with one another, and recover offset X also of pre-laminated holes 2a, 2c.

Accordingly, the positions of axes L, N of pre-laminated holes 2a, 2c with respect to relative axes F, H of moulds 27a, 27c are determined by the positioning of pre-laminated hole 2b in the desired injection position.

In particular, actuator 50 is controllable to arrest web 3 in a position at which the distance between axis L of pre-laminated hole 2a and axis F of mould 27a equals the inevitable tolerance error existing in the distance between axes L, M.

In the very same way, actuator 50 is controllable to arrest web 3 in a position at which the distance between axis N of pre-laminated hole 2c and axis H of mould 27c equals the inevitable tolerance error existing in the distance between axes N, L.

Furthermore, actuator 50 is controllable to substantially leave pre-laminated holes 2d, 2e, 2f in the respective position, once web 3 has been arrested and before the injection of respective opening devices 4.

In this way, pre-laminated hole 2e remains in the respective desired injection position with respect to mould 28b whereas the pre-laminated holes 2d, 2f remains spaced from the respective desired injection positions only by the inevitable tolerance errors existing in the distance between axes O, P and P, Q respectively.

In greater detail, actuator 50 is interposed along direction A between moulds 27a, 27b, 27c and moulds 28a, 28b, 28c.

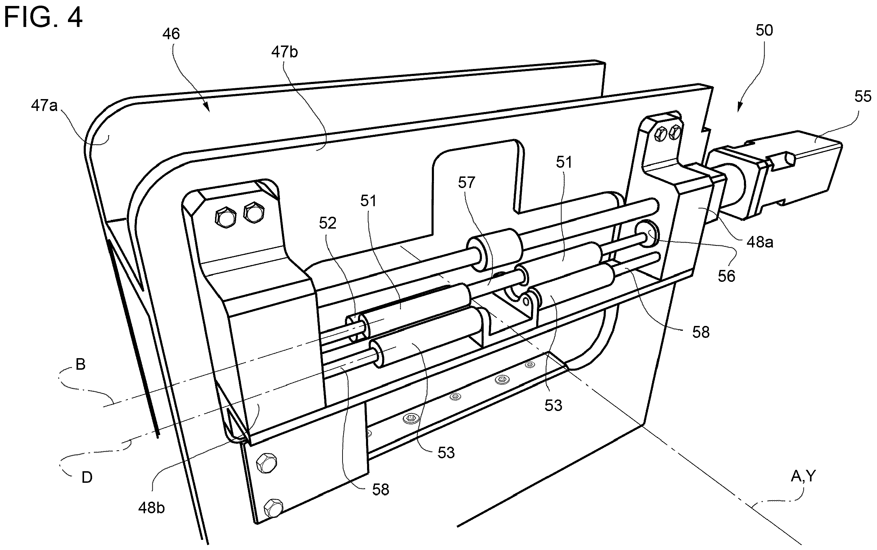

Actuator 50 substantially comprises (Figures 4 to 6) :
- a frame 46;
- a pair of rollers 51, which are arranged on a side 5a of web 3, cooperate with stretch 22 of portion 20, and eccentrically rotate about a common axis B orthogonal to direction A and horizontal, in the embodiment shown;
- a pair of rollers 52, which are arranged on a side 5b of web 3, cooperate with stretch 22 of portion 20, and rotate about a common axis C; and
- a pair of rollers 53, which are arranged on side 5b of web 3, cooperate with stretch 22 of portion 20, and rotate about a common axis D.

In detail, frame 46 comprises:
- two walls 47a, 47b lying on respective planes orthogonal to direction A; and
- a pair of support elements 48a, 48b, which protrude from wall 47b towards motor 44 and which rotatably support rollers 51 eccentrically about axis B.

Walls 47a, 47b are connected to one another.

Support elements 48a, 48b are staggered parallel to axis B.

In particular, wall 47b is arranged downstream of wall 47a, proceeding along direction A according to the advancing sense of web 3.

Side 5a is the upper side of web 3 and side 5b is the lower side of web 3, in the embodiment shown.

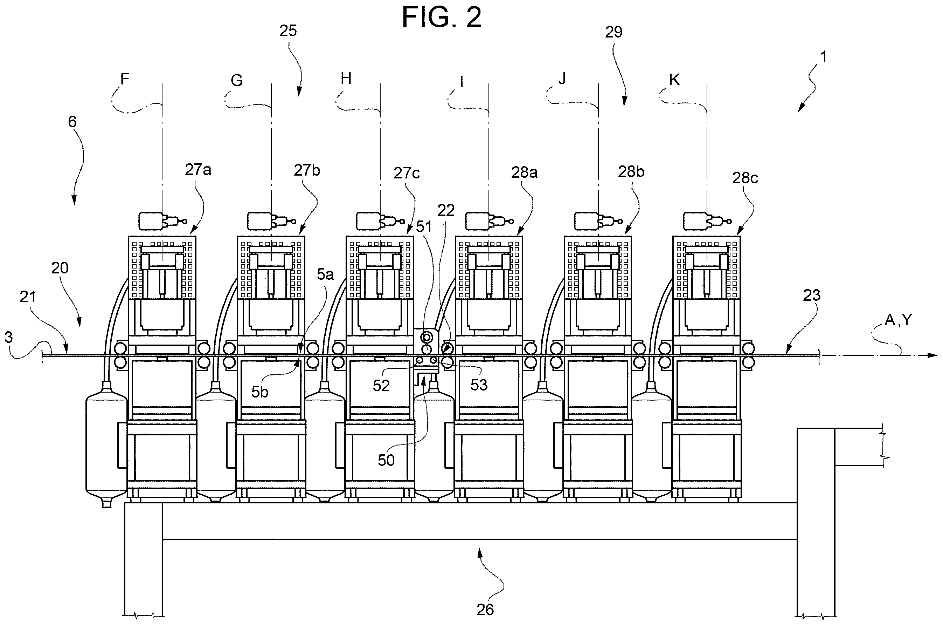

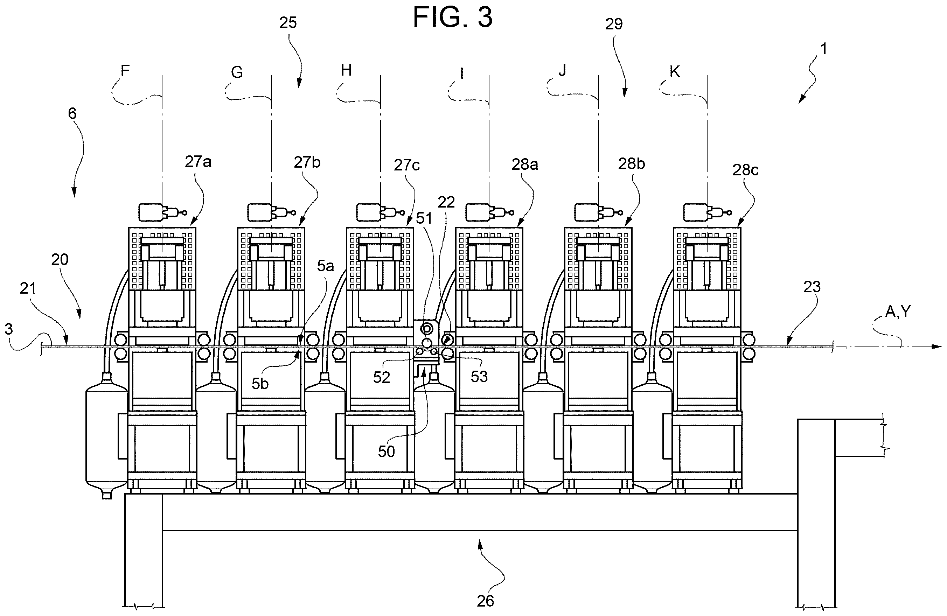

Rollers 51 selectively rotate eccentrically about axis B between:
- a first position (shown in Figures 2 and 5), at which they are tangent to the plane of web 3, and therefore leave stretch 22 coplanar with the remaining part of web 3 and substantially do not exert any action on stretch 22 of web 3; and
- a second position (shown in Figures 3 and 6), at which they extend partly beyond the plane of stretches 21, 23 of web 3, and therefore interfere with stretch 22 and press stretch 22 towards rollers 52, 53.

As shown in Figures 3 and 6, when rollers 51 are set in the second position, stretch 22 forms a loop 80 housed inside a room 81. Room 81 is interposed between rollers 52, 53 along direction A and extends on side 5b of web 3.

As a result, when rollers 51 are set in the second position, stretch 21 of portion 20 of web 3 with pre-laminated holes 2a, 2b, 2c is dragged towards motor 44, thus recovering offset X up to reach the position shown in Figure 6.

On the contrary, when rollers 51 are set in the first position, stretch 22 is substantially un-deformed and does not occupy room 81. Accordingly, stretch 21 remains stationary parallel to direction A.

It is important to point out that rollers 51 can selectively assume a plurality of second positions.

For each second position, the extension of loop 80 varies and therefore effective distances between axes G, M measured parallel to direction A of different lengths are recovered.

In the embodiment shown, rollers 51 are arranged above rollers 52, 53.

Furthermore, rollers 52, 53 are idle with respect to respective axes C, D, which are fixed relative to frame 46, and are adapted to counter-support side 5b of web 3.

Axes C, D are parallel to each other, parallel to axis B and staggered with respect to direction A.

In particular, axis C is arranged upstream of axis D, proceeding along direction A according to the advancing direction of web 3.

Axis B is interposed between axes C, D, proceeding along direction A according to the advancing direction of web 3

Axes C, D define a plane, horizontal in the embodiment shown, and parallel to direction A.

Axis B and axes C, D are arranged on opposite sides 5a, 5b of web 3.

Rollers 51, 52, 53 are spaced from each other along respective axes B, C, D.

Actuator 50 substantially comprises (Figure 4):
- a motor 55 controllable on the basis of offset X to be recovered;
- a pin 56 of axis B, rotatably supported inside support element 48a and driven in rotation about axis B by motor 55; and
- a shaft 57 parallel to axis B, to which are idly fitted rollers 51 and eccentrically supported by pin 56 with respect to axis B.

In particular, rollers 51 are rotatably mounted in an idle way on shaft 57 about their own axes parallel to and distinct from axis B, by not-shown bearings.

In the very same way, each roller 52, 53 is rotatable mounted in an idle way on a relative shaft 58 and about respective axis C, D, by not-shown bearings.

Unit 1 also comprises a control unit 30 (only schematically shown in Figure 7) which receives measure signals M2 from sensor 15 and generates control signal S1 for motor 55.

Furthermore, control unit 30 receives measure signal M5' from sensor 100 and generates control signal S2 for motor 44.

In particular, control unit 30 has stored in memory the desired injection positions of pre-laminated holes 2a, 2b, 2c, with respect to moulds 27a, 27b, 27c and evaluates offset X, i.e. the distance along direction A between the real detected positions of pre-laminated holes 2a, 2b, 2c and the position at which they should be to arrive in the respective desired injection positions, once web 3 is arrested.

Control unit 30 is configured to generate control signal S1 for motor 55 on the basis of measured signal M2 and once web 3 has been arrested by device 16.

Control signal S1 for motor 55 results in the rotation of rollers 51 eccentrically about axis B in the second position, so as to press stretch 22 towards rollers 52, 53 and form loop 80, which is housed in room 81.

Accordingly, stretch 21 only of each portion 20 is moved, dragged in the embodiment shown, along direction A and towards motor 44 for a distance, which is necessary to render axes M, G coincident and, therefore, to arrange pre-laminated hole 2b exactly in the desired injection position.

In this way, the operation of actuator 50 recovers offset X of pre-laminated holes 2a, 2b, 2c and renders axes M, G coincident to one another.

Furthermore, control unit 30 is configured to generate control signal S2 for motor 44 on the basis of measured signal M5' detected by sensor 100.

In particular, control signal S2 for motor 44 causes the web 3 to be arrested in a position at which axis P of pre-laminated hole 2e coincide with axis J of moulds 28b.

In this way, pre-laminated hole 2e is arranged in respective desired injection position with axes J, P coincident.

Furthermore, the distances between axes I, K of pre-laminated holes 2d, 2f and relative axes O, Q of moulds 28d, 28f equal the inevitable tolerance errors existing between axes I, J and k, J respectively.

The operation of feeding group 6 and of unit 1 will be hereinafter described with reference to only one portion 20 and to the relative pre-laminated holes 2a, 2b, 2c, 2d, 2e, 2f and corresponding magnetic markers C1, C2, C3, C4, C5, C6.

The operation of feeding group 6 will be furthermore described starting from a situation, at which rollers 51 are in the first positions and, therefore, do not press stretch 22 inside room 81 (Figures 2 and 5).

Web 3 provided with pre-laminated holes 2a, 2b, 2c, 2d, 2e, 2f and magnetic markers C1, C2, C3, C4, C5, C6 is wound off from reel along path Y.

In particular, pre-laminated holes 2a, 2b, 2c, 2d, 2e, 2f are equi-spaced along direction A.

Motor 44 of device 16 stepwise and horizontally advances web 3 along direction A and up to arrange portion 20 below moulding station 26, while tensioning device 10 provides web 3 with the correct level of tension.

As web 3 advances along direction A, side 5a of web 3 causes the idle rotation of rollers 51 about their own axis, which is distinct from and parallel to axis B. Furthermore, rollers 52, 53 supports side 5b of web 3 and are rotated, by web 3, about respective axes C, D.

Sensor 15 detects the presence of magnetic markers C1, C2, C3, C4, C5, C6 and generates measure signals M1, M2, M3, M4, M5, M6 which are associated to the real position of pre-laminated holes 2a, 2b, 2c, 2d, 2e, 2f upstream of moulding station 26.

In the very same way, sensor 100 detects the presence of magnetic markers C1, C2, C3, C4, C5, C6 and generates measure signals M1', M2', M3', M4', M5', M6'. which are associated to the real position of pre-laminated holes 2a, 2b, 2c, 2d, 2e, 2f between moulds 28a, 28b.

Control unit 30 receives measured signal M5' associated to the real-position of axis P of pre-laminated hole 2e; evaluates the difference between the real position of axis P and the desired injection position coincident with axis J, and generates control signal S2 for motor 44.

In particular, motor 44 stops web 3 in a position (Figure 5), at which axis P of pre-laminated hole 2e substantially coincides with axis J of mould 28e, i.e. substantially in the desired injection position of pre-laminated hole 2e.

The positions of pre-laminated holes 2d, 2f of stretch 23 when web 3 is arrested are determined by the desired injection position of pre-laminated hole 2e.

In particular, the distance between axis O of pre-laminated hole 2d and axis I of mould 28a equals the inevitable tolerance error existing between axes O, P of respective pre-laminated holes 2d, 2e.

In the very same way, the distance between axis Q of pre-laminated hole 2f and axis K of mould 28c equals the inevitable tolerance error existing between axes Q, P of respective pre-laminated holes 2f, 2e.

Furthermore, when motor 44 has arrested web 3 (Figure 5), pre-laminated holes 2a, 2b, 2c of stretch 21 are arranged with an intentional offset X with respect to desired injection positions. This is due to the fact that the difference between lengths e and d equals offset X.

On the contrary, pre-laminated holes 2d, 2e, 2f of stretch 23 are arranged with no intentional offset with respect to the desired injection position.

Still more precisely, proceeding parallel to direction A, axis L (M, N) of pre-laminated hole 2a (2b, 2c) is arranged upstream of axis F (G, H) of mould 27a (27b, 27c), as shown in Figure 5.

At this stage, control unit 30 receives measured signal M2 associated to the real position of pre-laminated holes 2b; evaluates the difference between the real position and the desired injection position of pre-laminated hole 2b, and generates control signal S1 for motor 55.

In particular, motor 55 rotates rollers 51 eccentrically about axis B for a given angle associated to control signal S1.

More precisely, motor 55 drives rollers 51 in the second position, shown in Figures 2 and 5.

Due to the fact that they rotate eccentrically about axis B, rollers 51, when set in the second position, press stretch 22 towards rollers 52, 53.

Still more precisely, due to the rotation of rollers 51, stretch 22 forms loop 80 which occupies room 81 (Figure 5).

As a result, stretch 21 is dragged towards motor 44 whereas stretch 23 remains fixed.

In this way, offset X of pre-laminated holes 2a, 2b, 2c is recovered.

Furthermore, pre-laminated hole 2b is arranged in the desired injection position, with axis M, G substantially coincident with one another.

The dragging of stretch 21 also determines the position of axes L, N of pre-laminated holes 2a, 2c with respect to corresponding axes F, H of respective moulds 27a, 27c.

Still more precisely, the positions of pre-laminated holes 2a, 2c of stretch 21 when rollers 51 reach the second position, is determined by the position of pre-laminated hole 2e.

In particular, the distance between axis L of pre-laminated hole 2a and axis F of mould 27a equals the inevitable tolerance error existing between axes L, M of respective pre-laminated holes 2a, 2b.

In the very same way, the distance between axis N of pre-laminated hole 2c and axis H of mould 27c equals the inevitable tolerance error existing between axes N, M of respective pre-laminated holes 2c, 2b.

At this stage, moulds 27a, 27b, 27c, 27d, 27e, 27f inject opening devices 4 on respective pre-laminated holes 2a, 2b, 2c, 2d, 2e, 2f and about respective axes F, G, H, I, J, K.

Afterwards, motor 55 rotates back rollers 51 in the first position (Figures 2 and 5), and web 3 is advanced, so as to arrange a new portion 20 below moulding station 26.

The advantages of feeding group 6 and of the method according to the present invention will be clear from the foregoing description.

In particular, devices 10, 16 are controllable to arrest web 3 in a position, at which pre-laminated holes 2a, 2b, 2c are offset by respective desired injection position; and actuator 50 moves web 3, so as to recover offset X and arrange pre-laminated hole 2b in the desired injection position.

In particular, in the above-identified arrest position, the difference between length e and length d equals offset X.

In this way, it is possible to ensure that, when moulding injection is carried out, pre-laminated hole 2b is in the desired injection position and that pre-laminated holes 2a, 2c are spaced from respective injected position only by the inevitable tolerance errors in the distances between axes L, M and M, N respectively.

Moreover, actuator 50 moves pre-laminated holes 2a, 2b, 2c without moving pre-laminated holes 2d, 2e, 2f.

Accordingly, the tolerance chain formed by the tolerance errors in the distances between axes L, M and M, N of pre-laminated holes 2a, 2b and 2b, 2c is made completely independent of the tolerance chain formed by tolerance errors in the distances between axes O, P and P, Q of pre-laminated holes 2d, 2e and 2e, 2f.

Therefore, feeding group 6 can feed moulding station 26 with both pre-laminated holes 2a, 2b, 2c and pre-laminated holes 2d, 2e, 2f without lengthening the tolerance errors chain and, therefore, without penalizing the precision of the positioning of pre-laminated holes 2a, 2b, 2c, 2d, 2e, 2f with respect to respective moulds 27a, 27b, 27c, 28a, 28b, 28c.

The feeding rate of feeding group 6 is therefore enhanced, without penalizing the precision of the positioning of pre-laminated holes 2a, 2b, 2c, 2d, 2e, 2f.

Furthermore, actuator 50 comprises rollers 51, which rotate eccentrically about axis B from the first position at which are tangent to advancing web 3 to the second position at which they press stretch 22 of arrested web 3 in room 81 so as to recover offset X.

Accordingly, rollers 51 efficiently recover offset X when set in the second position without damaging web 3 when set in the first position.

Clearly, changes may be made to feeding group 6 and to the method without, however, departing from the protective scope defined in the accompanying Claims.

In particular, unit 1 could comprise at least two tools different from moulds 27a, 27b, 27c; 28a, 28b, 28c which carries out different operation from moulding injection of opening devices 4 on respective areas of web 3 different from pre-laminated holes 2a, 2b, 2c; actuator 50 being interposed along direction A between those two tools.

Furthermore, actuator 50 could be a linear push element, which can be selectively moved in a position at which pushes stretch 22 of web 3 inside room 81.

Markers C1, C2, C3, C4, C5, C6 could be not magnetic. For example, they could be formed by respective optically-readable printed marks.

Finally, length e could be smaller than length d and offset X could be equal to d-e.

## Claims

1. A unit (1) for carrying out a first operation and a second operation respectively onto a first area (2d, 2e, 2f) and a second area (2a, 2b, 2c) of a packaging material;
said first area (2d, 2e, 2f) and said second area (2a, 2b, 2c) being spaced for a first distance (e) along said direction (A) when a portion (20) of said packaging material comprising said first area (2d, 2e, 2f) and said second area (2a, 2b, 2c) is flat;
said unit (1) comprising:
- a feeding group (6) for feeding a web (3) of said packaging material along a direction (A) and in a first sense;
- at least one first tool (28a, 28b, 28c) adapted to carry out said first operation on said first area (2d, 2e, 2f) arranged in a first desired position;
- at least one second tool (27a, 27b, 27c) adapted to carry out said second operation on said second area (2d, 2e, 2f) arranged in a second desired position;
said first (28a, 28b, 28c) and said second tool (27a, 27b, 27c) being spaced for a second distance (d) along said direction (A);
wherein said feeding group (6) comprises:
- advancing means (10, 16) controllable to arrest said web (3) in a position, at which said second area (2a, 2b, 2c) is spaced for an intentional offset (X) from said second desired position and said first area (2d, 2e, 2f) is arranged with no intentional offset with respect to said first desired position; and
- actuating means (50) controllable for moving said second area (2a, 2b, 2c) towards said second desired position, so as to recover said offset (X);
the absolute value of the difference between said first distance (e) and said second distance (d) being equal to said offset (X),
**characterized in that** said first tool (28a, 28b, 28c) is a first applicator for applying a first opening device (4) onto said first area (2d, 2e, 2f) and in said first desired position, and **in that** said second tool (27a, 27b, 27c) is a second applicator for applying a second opening device (4) onto said second area (2a, 2b, 2c).

2. The unit of claim 1, **characterized in that** said actuating means (50) are controllable to move said second area (2a, 2b, 2c) towards said second desired position, parallel to said direction (A) and in said first sense.

3. The unit of claim 1 or 2, **characterized in that** said advancing means (10, 16) are controllable to arrest said first area (2d, 2e, 2f) in said first desired position; and **in that** said actuating means (50) are controllable to substantially leave said first area (2d, 2e, 2f) in said first desired position.

4. The unit of any one of the foregoing claims, **characterized in that** said actuating means (50) comprise at least one moving member (51), which may move between:
- a first position, at which it does not interact with said web (3); and
- a second position, at which it presses said web (3) so as to move said second area (2a, 2b, 2c) towards said second desired position, when said web (3) has been arrested by said advancing means (10, 16).

5. The unit of claim 4, **characterized in that** said moving member (51) is a rotating member (51) that rotates eccentrically about a first axis (B) between said first position and said second position;
said actuating means (50) comprising at least a pair of rollers (52, 53) arranged, in use, on the opposite side of said rotating member (51) with respect to said web (3) and adapted to counter-support said web (3) against said rotating member (51);
said rollers (52, 53) having respective second axes (C, D) spaced along said direction (A);
said first axis (B) being interposed between said second axes (C, D), so that the eccentric rotation of said rotating member (51) presses a portion (22) of said web (3) in a room (81) defined between said second axes (C, D) and arranged on the opposite side of said web (3) with respect to said first rotating member (51).

6. The unit of any one of the foregoing claims, **characterized by** comprising sensing means (15) for generating a signal (S1) associated to the real position of said second area (2a, 2b, 2c); said actuating means (50) being controllable on the basis of said signal (S1) to move said second area (2a, 2b, 2c) towards said second desired position.

7. The unit of any one of the foregoing claims, **characterized in that** said actuating means (50) are arranged downstream of said second tool (27a, 27b, 27c) and upstream of said first tool (28a, 28b, 28c), proceeding along said direction (A) according to said first sense.

8. A method for carrying out a first operation and a second operation respectively onto a first area (2d, 2e, 2f) and a second area (2a, 2b, 2c) of a packaging material;
said first area (2d, 2e, 2f) and said second area (2a, 2b, 2c) being spaced for a first distance (e) along said direction (A) when a portion (20) of said packaging material comprising said first area (2d, 2e, 2f) and said second area (2a, 2b, 2c) is flat;
said method comprising the steps of:
- feeding a web (3) of said packaging material along a direction (A) and in a first sense;
- carrying out said first operation on said first area (2d, 2e, 2f) and at a first desired position, by using at least one first tool (28a, 28b, 28c); and
- carrying out said second operation on said second area (2a, 2b, 2c) and at a second desired position, by using at least one second tool (27a, 27b, 27c);
said first (28a, 28b, 28c) and said second tool (27a, 27b, 27c) being spaced for a second distance (d) along a direction (A);
wherein said step of feeding comprises the steps of:
- arresting said web (3) in a position, at which said second area (2a, 2b, 2c) is spaced by an intentional offset (X) from said second desired position and said first area (2d, 2e, 2f) is arranged with no intentional offset with respect to said first desired position; and
- moving said second area (2a, 2b, 2c) towards said second desired position, so as to recover said offset (X) ;
the absolute value of the difference between said first distance (e) and said second distance (d) being equal to said offset (X),
**characterized in that** said step of carrying out said first operation on said first area (2d, 2e, 2f) comprises the step of applying a first opening device (4) on said first area (2d, 2e, 2f), and **in that** said step of carrying out said second operation on said second area (2a, 2b, 2c) comprises the step of applying a second opening device (4) on said second area (2a, 2b, 2c).

9. The method of claim 8, **characterized in that** said step of moving comprises the step of dragging said second area (2a, 2b, 2c) in said first sense and along said direction (A).

10. The method of claim 8 or 9, **characterized in that** said step of feeding comprises the step of arresting said first area (2d, 2e, 2f) in said first desired position; and **in that** said step of moving said second area (2a, 2b, 2c) comprises the step of substantially leaving said first area (2d, 2e, 2f) in said first desired position.

11. The method of claim 9 or 10, **characterized in that** said step of dragging comprises the steps of:
- pressing a portion (22) of said web (3) interposed between said first area (2d, 2e, 2f) and said second area (2a, 2b, 2c), by moving a movable element (51) between a first position, at which said movable element (51) does not interact with said web (3), and a second position, at which movable element (51) presses said web (3).

12. The method of claim 11, **characterized in that** said step of dragging comprises the step of eccentrically rotating said movable element (51) about a first axis (B) and between said first position and said second position; the method further comprising the step of:
- supporting said portion (22) of said web (3), by using a pair of rollers (52, 53) rotatable about respective second axes (C, D), spaced along said direction (A), and arranged on the opposite side of said movable element (51) with respect to said web (3),
said step of pressing comprising the step of forcing said portion (22) in a room (81) defined between said second axes (C, D) and arranged on the opposite side of said web (3) with respect to said element (51).

13. The method of any one of claims 8 to 12, **characterized by** comprising the steps of:
- carrying out a plurality of said second operations on respective said second areas (2a, 2b, 2c), by using a plurality of respective said second tools (27a, 27b, 27c) ;
- arranging, during said step of moving, one (2b) of said second areas (2a, 2b, 2c) in respective said second desired position; and
- arranging, during said step of moving, the others (2a, 2c) of said second areas (2a, 2b, 2c) in respective positions determined by said desired position of said one (2b) of said second areas (2a, 2b, 2c).

## Patentansprüche

1. Einheit (1) zum Durchführen einer ersten Operation bzw. einer zweiten Operation auf einem ersten Bereich (2d, 2e, 2f) und einem zweiten Bereich (2a, 2b, 2c) eines Verpackungsmaterials;
wobei der erste Bereich (2d, 2e, 2f) und der zweite Bereich (2a, 2b, 2c) in einem ersten Abstand (e) entlang der Richtung (A) beabstandet sind, wenn ein Abschnitt (20) des Verpackungsmaterials, der den ersten Bereich (2d, 2e, 2f) und den zweiten Bereich (2a, 2b, 2c) umfasst, flach ist;
wobei die Einheit (1) Folgendes umfasst:
- eine Zufuhrgruppe (6) zum Zuführen einer Bahn (3) des Verpackungsmaterials entlang einer Richtung (A) und in einem ersten Richtungssinn;
- mindestens ein erstes Werkzeug (28a, 28b, 28c), das zum Durchführen der ersten Operation auf dem ersten Bereich (2d, 2e, 2f), der in einer ersten erwünschten Position angeordnet ist, ausgeführt ist;
- mindestens ein zweites Werkzeug (27a, 27b, 27c), das zum Durchführen der zweiten Operation auf dem zweiten Bereich (2d, 2e, 2f), der in einer zweiten erwünschten Position angeordnet ist, ausgeführt ist;
wobei das erste (28a, 28b, 28c) und das zweite Werkzeug (27a, 27b, 27c) in einem zweiten Abstand (d) entlang der Richtung (A) beabstandet sind;
wobei die Zufuhrgruppe (6) Folgendes umfasst:
- Vorschubmittel (10, 16), die dahingehend gesteuert werden können, das Bahn (3) in einer Position festzustellen, in der der zweite Bereich (2a, 2b, 2c) mit einem beabsichtigten Versatz (X) von der zweiten erwünschten Position beabstandet ist und der erste Bereich (2d, 2e, 2f) mit keinem beabsichtigten Versatz bezüglich der ersten erwünschten Position angeordnet ist; und
- Betätigungsmittel (50), die dahingehend gesteuert werden können, den zweiten Bereich (2a, 2b, 2c) in die zweite erwünschte Position zu bewegen, um den Versatz (X) zu überwinden;
wobei der Absolutwert der Differenz zwischen dem ersten Abstand (e) und dem zweiten Abstand (d) gleich dem Versatz (X) ist,
**dadurch gekennzeichnet, dass** das erste Werkzeug (28a, 28b, 28c) eine erste Aufbringvorrichtung zum Aufbringen einer ersten Öffnungsvorrichtung (4) auf den ersten Bereich (2d, 2e, 2f) und in der ersten erwünschten Position ist, und dass das zweite Werkzeug (27a, 27b, 27c) eine zweite Aufbringvorrichtung zum Aufbringen einer zweiten Öffnungsvorrichtung (4) auf den zweiten Bereich (2a, 2b, 2c) ist.

2. Einheit nach Anspruch 1, **dadurch gekennzeichnet, dass** die Betätigungsmittel (50) dahingehend gesteuert werden können, den zweiten Bereich (2a, 2b, 2c) parallel zur Richtung (A) und im ersten Richtungssinn in die zweite erwünschte Position zu bewegen.

3. Einheit nach Anspruch 1 oder 2, **dadurch gekennzeichnet, dass** die Vorschubmittel (10, 16) dahingehend gesteuert werden können, den ersten Bereich (2d, 2e, 2f) in der ersten erwünschten Position festzustellen; und dass die Betätigungsmittel (5) dahingehend gesteuert werden können, den ersten Bereich (2d, 2e, 2f) im Wesentlichen in der ersten erwünschten Position zu belassen.

4. Einheit nach einem der vorangehenden Ansprüche, **dadurch gekennzeichnet, dass** die Betätigungsmittel (50) mindestens ein bewegliches Glied (51) umfasst, das sich bewegen kann zwischen:
- einer ersten Position, in der es nicht mit der Bahn (3) zusammenwirkt; und
- einer zweiten Position, in der es Druck auf die Bahn (3) ausübt, um den zweiten Bereich (2a, 2b, 2c) in die zweite erwünschte Position zu bewegen, wenn die Bahn (3) durch die Vorschubmittel (10, 16) festgestellt wurde.

5. Einheit nach Anspruch 4, **dadurch gekennzeichnet, dass** das bewegliche Glied (51) ein rotierendes Glied (51) ist, das sich exzentrisch um eine erste Achse (B) zwischen der ersten Position und der zweiten Position dreht;
wobei die Betätigungsmittel (50) mindestens ein Paar Rollen (52, 53), die im Gebrauch bezüglich der Bahn (3) auf der gegenüberliegenden Seite des rotierenden Glieds (51) angeordnet sind und zum Gegenhalten der Bahn (3) gegen das rotierende Glied (51) ausgeführt sind, umfassen;
wobei die Rollen (52, 53) jeweilige zweite Achsen (C, D), die entlang der Richtung (A) beabstandet sind, aufweisen;
wobei die erste Achse (B) zwischen den zweiten Achsen (C, D) angeordnet ist, damit die exzentrische Drehung des rotierenden Glieds (51) einen Abschnitt (22) der Bahn (3) in einen Raum (81) drückt, der zwischen den zweiten Achsen (C, D) definiert und bezüglich des ersten rotierenden Glieds (51) auf der gegenüberliegenden Seite der Bahn (3) angeordnet ist.

6. Einheit nach einem der vorstehenden Ansprüche, **dadurch gekennzeichnet, dass** sie Erfassungsmittel (15) zum Erzeugen eines Signals (S1), das mit der tatsächlichen Position des zweiten Bereichs (2a, 2b, 2c) in Zusammenhang steht, umfasst; wobei die Betätigungsmittel (50) auf Grundlage des Signals (S1) dahingehend gesteuert werden können, den zweiten Bereich (2a, 2b, 2c) in die zweite erwünschte Position zu bewegen.

7. Einheit nach einem der vorstehenden Ansprüche, **dadurch gekennzeichnet, dass** die Betätigungsmittel (50) dem zweiten Werkzeug (27a, 27b, 27c) nachgelagert und dem ersten Werkzeug (28a, 28b, 28c) vorgelagert entsprechend dem ersten Richtungssinn entlang der Richtung (A) angeordnet sind.

8. Verfahren zum Durchführen einer ersten Operation bzw. einer zweiten Operation auf einem ersten Bereich (2d, 2e, 2f) und einem zweiten Bereich (2a, 2b, 2c) eines Verpackungsmaterials;
wobei der erste Bereich (2d, 2e, 2f) und der zweite Bereich (2a, 2b, 2c) in einem ersten Abstand (e) entlang der Richtung (A) beabstandet sind, wenn ein Abschnitt (20) des Verpackungsmaterials, der den ersten Bereich (2d, 2e, 2f) und den zweiten Bereich (2a, 2b, 2c) umfasst, flach ist;
wobei das Verfahren die folgenden Schritte umfasst:
- Zuführen einer entsprechend dem ersten Richtungssinn Bahn (3) des Verpackungsmaterials entlang einer Richtung (A) und in einem ersten Richtungssinn;
- Durchführen der ersten Operation auf dem ersten Bereich (2d, 2e, 2f) und in einer ersten erwünschten Position durch Verwenden mindestens eines ersten Werkzeugs (28a, 28b, 28c); und
- Durchführen der zweiten Operation auf dem zweiten Bereich (2a, 2b, 2c) und in einer zweiten erwünschten Position durch Verwenden mindestens eines zweiten Werkzeugs (27a, 27b, 27c);
wobei das erste (28a, 28b, 28c) und das zweite Werkzeug (27a, 27b, 27c) in einem zweiten Abstand (d) entlang einer Richtung (A) beabstandet sind;
wobei der Schritt des Zuführens die folgenden Schritte umfasst:
- Feststellen der Bahn (3) in einer Position, in der der zweite Bereich (2a, 2b, 2c) mit einem Versatz (X) von der zweiten erwünschten Position beabstandet ist und der erste Bereich (2d, 2e, 2f) mit keinem beabsichtigten Versatz bezüglich der ersten erwünschten Position angeordnet ist; und
- Bewegen des zweiten Bereichs (2a, 2b, 2c) in die zweite erwünschte Position, um den Versatz (X) zu überwinden;
wobei der Absolutwert der Differenz zwischen dem ersten Abstand (e) und dem zweiten Abstand (d) gleich dem Versatz (X) ist,
**dadurch gekennzeichnet, dass** der Schritt des Durchführens der ersten Operation auf dem ersten Bereich (2d, 2e, 2f) den Schritt des Aufbringens einer ersten Öffnungsvorrichtung (4) auf den ersten Bereich (2d, 2e, 2f) umfasst, und dass der Schritt des Durchführens der zweiten Operation auf dem zweiten Bereich (2a, 2b, 2c) den Schritt des Aufbringens einer zweiten Öffnungsvorrichtung (4) auf den zweiten Bereich (2a, 2b, 2c) umfasst.

9. Verfahren nach Anspruch 8, **dadurch gekennzeichnet, dass** der Schritt des Bewegens den Schritt des Ziehens des zweiten Bereichs (2a, 2b, 2c) im ersten Richtungssinn und entlang der Richtung (A) umfasst.

10. Verfahren nach Anspruch 8 oder 9, **dadurch gekennzeichnet, dass** der Schritt des Zuführens den Schritt des Feststellens des ersten Bereichs (2d, 2e, 2f) in der ersten erwünschten Position umfasst; und dass der Schritt des Bewegens des zweiten Bereichs (2a, 2b, 2c) den Schritt des Belassens des ersten Bereichs (2d, 2e, 2f) im Wesentlichen in der ersten erwünschten Position umfasst.

11. Verfahren nach Anspruch 9 oder 10, **dadurch gekennzeichnet, dass** der Schritt des Ziehens die folgenden Schritte umfasst:
- Ausüben von Druck auf einen Abschnitt (22) der Bahn (3), der zwischen dem ersten Bereich (2d, 2e, 2f) und dem zweiten Bereich (2a, 2b, 2c) angeordnet ist, durch Bewegen eines beweglichen Glieds (51) zwischen einer ersten Position, in der das bewegliche Glied (51) nicht mit der Bahn (3) zusammenwirkt, und einer zweiten Position, in der das bewegliche Glied (51) Druck auf die Bahn (3) ausübt.

12. Verfahren nach Anspruch 11, **dadurch gekennzeichnet, dass** der Schritt des Ziehens den Schritt des exzentrischen Drehens des beweglichen Glieds (51) um eine erste Achse (B) und zwischen der ersten Position und der zweiten Position umfasst; wobei das Verfahren ferner den folgenden Schritt umfasst:
- Stützen des Abschnitts (22) der Bahn (3) durch Verwenden eines Paars Rollen (52, 53), die um jeweilige zweite Achsen (C, D) herum drehbar sind, die entlang der Richtung (A) beabstandet sind und bezüglich der Bahn (3) auf der gegenüberliegenden Seite des beweglichen Glieds (51) angeordnet sind,
wobei der Schritt des Ausübens von Druck den Schritt des Hineinpressens des Abschnitts (22) in einen Raum (81), der zwischen den zweiten Achsen (C, D) definiert wird und der bezüglich des Glieds (51) auf der gegenüberliegenden Seite der Bahn (3) angeordnet ist, umfasst.

13. Verfahren nach einem der Ansprüche 8 bis 12, **dadurch gekennzeichnet, dass** es die folgenden Schritte umfasst:
- Durchführen einer Vielzahl der zweiten Operationen auf den jeweiligen zweiten Bereichen (2a, 2b, 2c) durch Verwenden einer Vielzahl der jeweiligen zweiten Werkzeuge (27a, 27b, 27c);
- beim Schritt des Bewegens Anordnen eines (2b) der zweiten Bereiche (2a, 2b, 2c) in der jeweiligen zweiten erwünschten Position; und
- beim Schritt des Bewegens Anordnen der anderen (2a, 2c) der zweiten Bereiche (2a, 2b, 2c) in jeweiligen Positionen, die durch die erwünschte Position des einen (2b) der zweiten Bereiche (2a, 2b, 2c) bestimmt werden.

## Revendications

1. Unité (1) pour exécuter une première opération et une seconde opération, respectivement, sur une première région (2d, 2e, 2f) et une seconde région (2a, 2b, 2c) d'un matériau d'emballage;
ladite première région (2d, 2e, 2f) et ladite seconde région (2a, 2b, 2c) étant espacées d'une première distance (e) le long de ladite direction (A) lorsqu'une partie (20) dudit matériau d'emballage comprenant ladite première région (2d, 2e, 2f) et ladite seconde région (2a, 2b, 2c) est plate;
ladite unité (1) comprenant:
- un groupe d'alimentation (6) pour amener une bande (3) dudit matériau d'emballage le long d'une direction (A) et dans un premier sens;
- au moins un premier outil (28a, 28b, 28c) adapté pour exécuter ladite première opération sur ladite première région (2d, 2e, 2f) agencée dans une première position souhaitée;
- au moins un second outil (27a, 27b, 27c) adapté pour exécuter ladite seconde opération sur ladite seconde région (2d, 2e, 2f) agencée dans une seconde position souhaitée;
ledit premier outil (28a, 28b, 28c) et ledit second outil (27a, 27b, 27c) étant espacés pour une seconde distance (d) le long de ladite direction (A);
dans lequel ledit groupe d'alimentation (6) comprend:
- des moyens d'avancement (10, 16) commandables pour arrêter ladite bande (3) dans une position, à laquelle ladite seconde région (2a, 2b, 2c) est espacée d'un décalage intentionnel (X) de ladite seconde position souhaitée et ladite première région (2d, 2e, 2f) est agencée sans aucun décalage intentionnel par rapport à ladite première position souhaitée; et
- des moyens d'actionnement (50) commandables pour déplacer ladite seconde région (2a, 2b, 2c) en direction de ladite seconde position souhaitée de manière à récupérer ledit décalage (X);
la valeur absolue de la différence entre ladite première distance (e) et ladite seconde distance (d) étant égale audit décalage (X),
**caractérisée en ce que** le premier outil (28a, 28b, 28c) est un premier applicateur pour appliquer un premier dispositif d'ouverture (4) sur ladite première région (2d, 2e, 2f) et dans ladite première position souhaitée, et **en ce que** ledit second outil (27a, 27b, 27c) est un second applicateur pour appliquer un second dispositif d'ouverture (4) sur ladite seconde région (2a, 2b, 2c).

2. Unité selon la revendication 1, **caractérisée en ce que** lesdits moyens d'actionnement (50) sont commandables pour déplacer ladite seconde région (2a, 2b, 2c) en direction de ladite seconde position souhaitée, parallèlement à ladite direction (A) et dans ledit premier sens.

3. Unité selon la revendication 1 ou 2, **caractérisée en ce que** lesdits moyens d'avancement (10, 16) sont commandables pour arrêter ladite première région (2d, 2e, 2f) dans ladite première position souhaitée; et **en ce que** lesdits moyens d'actionnement (50) sont commandables pour laisser sensiblement ladite première région (2d, 2e, 2f) dans ladite première position souhaitée.

4. Unité selon l'une quelconque des revendications précédentes, **caractérisée en ce que** lesdits moyens d'actionnement (50) comprennent au moins un élément mobile (51), qui peut se déplacer entre:
- une première position, à laquelle il n'interagit pas avec ladite bande (3); et
- une seconde position, à laquelle il presse ladite bande (3) de manière à déplacer ladite seconde région (2a, 2b, 2c) en direction de ladite seconde position souhaitée, lorsque ladite bande (3) a été arrêtée par lesdits moyens d'avancement (10, 16).

5. Unité selon la revendication 4, **caractérisée en ce que** ledit élément mobile (51) est un élément rotatif (51) qui tourne de façon excentrique autour d'un premier axe (B) entre ladite première position et ladite seconde position;
lesdits moyens d'actionnement (50) comprenant au moins une paire de rouleaux (52, 53) agencés, lors de l'utilisation, sur le côté opposé dudit élément rotatif (51) par rapport à ladite bande (3) et adaptés pour contre-supporter ladite bande (3) contre ledit élément rotatif (51);
ladite rouleaux (52, 53) présentant des seconds axes respectifs (C, D) espacés le long de ladite direction (A);
ledit premier axe (B) étant interposé entre lesdits seconds axes (C, D), de telle sorte que la rotation excentrique dudit élément rotatif (51) presse une partie (22) de ladite bande (3) dans un espace (81) défini entre lesdits seconds axes (C, D) et agencé sur le côté opposé de ladite bande (3) par rapport audit premier élément rotatif (51).

6. Unité selon l'une quelconque des revendications précédentes, **caractérisée en ce qu'**elle comprend des moyens de détection (15) pour générer un signal (S1) associé à la position réelle de ladite seconde région (2a, 2b, 2c); lesdits moyens d'actionnement (50) étant commandables sur la base dudit signal (S1) pour déplacer ladite seconde région (2a, 2b, 2c) en direction de ladite seconde position souhaitée.

7. Unité selon l'une quelconque des revendications précédentes, **caractérisée en ce que** lesdits moyens d'actionnement (50) sont agencés en aval dudit second outil (27a, 27b, 27c) et en amont dudit premier outil (28a, 28b, 28c), s'étendant le long de ladite direction (A) suivant ledit premier sens.

8. Procédé pour exécuter une première opération et une seconde opération respectivement sur une première région (2d, 2e, 2f) et une seconde région (2a, 2b, 2c) d'un matériau d'emballage;
ladite première région (2d, 2e, 2f) et ladite seconde région (2a, 2b, 2c) étant espacées d'une première distance (e) le long de ladite direction (A) lorsqu'une partie (20) dudit matériau d'emballage comprenant ladite première région (2d, 2e, 2f) et ladite seconde région (2a, 2b, 2c) est plate;
ledit procédé comprenant les étapes suivantes:
- amener une bande (3) dudit matériau d'emballage le long d'une direction (A) et dans un premier sens;
- exécuter ladite première opération sur ladite première région (2d, 2e, 2f) et à une première position souhaitée, en utilisant au moins un premier outil (28a, 28b, 28c); et
- exécuter ladite seconde opération sur ladite seconde région (2a, 2b, 2c) et à une seconde position souhaitée, en utilisant au moins un second outil (27a, 27b, 27c);
ledit premier outil (28a, 28b, 28c) et ledit second outil (27a, 27b, 27c) étant espacés d'une seconde distance (d) le long d'une direction (A);
dans lequel ladite étape d'alimentation comprend les étapes suivantes:
- arrêter ladite bande (3) dans une position, à laquelle ladite seconde région (2a, 2b, 2c) est espacée d'un décalage intentionnel (X) de ladite seconde position souhaitée et ladite première région (2d, 2e, 2f) est agencée sans aucun décalage intentionnel par rapport à ladite première position souhaitée; et
- déplacer ladite seconde région (2a, 2b, 2c) en direction de ladite seconde position souhaitée, de manière à récupérer ledit décalage (X);
la valeur absolue de la différence entre ladite première distance (e) et ladite seconde distance (d) étant égale audit décalage (X),
**caractérisé en ce que** l'étape d'exécution de ladite première opération sur ladite première région (2d, 2e, 2f) comprend l'étape d'application d'un premier dispositif d'ouverture (4) sur ladite première région (2d, 2e, 2f), et **en ce que** ladite étape d'exécution de ladite seconde opération sur ladite seconde région (2a, 2b, 2c) comprend l'étape d'application d'un second dispositif d'ouverture (4) sur ladite seconde région (2a, 2b, 2c).

9. Procédé selon la revendication 8, **caractérisé en ce que** ladite étape de déplacement comprend l'étape consistant à entraîner ladite seconde région (2a, 2b, 2c) dans ledit premier sens et le long de ladite direction (A).

10. Procédé selon la revendication 8 ou 9, **caractérisé en ce que** ladite étape d'alimentation comprend l'étape consistant à arrêter ladite première région (2d, 2e, 2f) dans ladite première position souhaitée; et **en ce que** ladite étape de déplacement de ladite seconde région (2a, 2b, 2c) comprend l'étape consistant à laisser sensiblement ladite première région (2d, 2e, 2f) dans ladite première position souhaitée.

11. Procédé selon la revendication 9 ou 10, **caractérisé en ce que** ladite étape d'entraînement comprend les étapes suivantes:
- presser une partie (22) de ladite bande (3) interposée entre ladite première région (2d, 2e, 2f) et ladite seconde région (2a, 2b, 2c), en déplaçant un élément mobile (51) entre une première position, à laquelle ledit élément mobile (51) n'interagit pas avec ladite bande (3), et une seconde position, à laquelle ledit élément mobile (51) presse ladite bande (3).

12. Procédé selon la revendication 11, **caractérisé en ce que** ladite étape d'entraînement comprend l'étape consistant à faire tourner de façon excentrique ledit élément mobile (51) autour d'un premier axe (B) et entre ladite première position et ladite seconde position;
le procédé comprenant en outre l'étape consistant à:
- supporter ladite partie (22) de ladite bande (3), en utilisant une paire de rouleaux (52, 53) rotatifs autour de seconds axes respectifs (C, D), espacés le long de ladite direction (A), et agencés sur le côté opposé dudit élément mobile (51) par rapport à ladite bande (3),
ladite étape de pressage comprenant l'étape consistant à forcer ladite partie (22) dans un espace (81) défini entre lesdits seconds axes (C, D) et agencé sur le côté opposé de ladite bande (3) par rapport audit élément (51).

13. Procédé selon l'une quelconque des revendications 8 à 12, **caractérisé en ce qu'**il comprend les étapes suivantes:
- exécuter une pluralité desdites secondes opérations sur desdites secondes régions respectives (2a, 2b, 2c), en utilisant une pluralité desdits seconds outils respectifs (27a, 27b, 27c);
- agencer, pendant ladite étape de déplacement, une (2b) desdites secondes régions (2a, 2b, 2c) dans ladite seconde position souhaitée respective; et
- agencer, pendant ladite étape de déplacement, les autres (2a, 2c) desdites secondes régions (2a, 2b, 2c) dans des positions respectives déterminées par ladite position souhaitée de ladite une (2b) desdites secondes régions (2a, 2b, 2c).
